Europäisches Patentamt

European Patent Office

Office européen des brevets

(11) Veröffentlichungsnummer: **0 217 201 B1**

# EUROPÄISCHE PATENTSCHRIFT

(45) Veröffentlichungstag der Patentschrift: **25.03.92**

(21) Anmeldenummer: **86112642.3**

(22) Anmeldetag: **12.09.86**

(51) Int. Cl.⁵: **H02P 7/638**, A47L 7/02

(54) **Elektronische Schaltungsanordnung für Fussbodenpflegegeräte mit einer von einem Elektromotor angetriebenen Bürsteneinrichtung.**

(30) Priorität: **13.09.85 DE 3532789**

(43) Veröffentlichungstag der Anmeldung:
**08.04.87 Patentblatt 87/15**

(45) Bekanntmachung des Hinweises auf die
Patenterteilung:
**25.03.92 Patentblatt 92/13**

(84) Benannte Vertragsstaaten:
**CH DE GB IT LI SE**

(56) Entgegenhaltungen:
FR-A- 2 378 398     FR-A- 2 393 462
US-A- 3 555 357     US-A- 4 245 370
US-A- 4 370 690     US-A- 4 398 231

(73) Patentinhaber: **Stein & Co. GmbH**
**Wülfrather Strasse 47-49**
**W-5620 Velbert 15(DE)**

(72) Erfinder: **Die Erfinder haben auf ihre Nennung verzichtet**

(74) Vertreter: **Kraus, Walter, Dr. et al**
**Patentanwälte Kraus, Weisert & Partner**
**Thomas-Wimmer-Ring 15**
**W-8000 München 22(DE)**

Rank Xerox (UK) Business Services

## Beschreibung

Die Erfindung betrifft eine elektronische Schaltungsanordnung für Fußbodenpflegegeräte mit einer von einem Elektromotor angetriebenen Bürsteneinrichtung, umfassend eine den Elektromotor bei dessen Überlastung abschaltende Steuerschaltungsanordnung.

Sowohl im Haushalt als auch im Gewerbe werden zur Verbesserung der Saugleistung Staubsauger mit Bürstenvorsätzen ausgerüstet, oder aber direkt Bürstensauger eingesetzt.

Die Effektivität dieser Geräte hängt aber im wesentlichen vom Zustand der Bürsten ab. Durch den Verschleiß der Borsten der mit hoher Drehzahl rotierenden Bürsten nimmt die Saug- und Kehrwirkung stark ab. Um diesen Verschleiß auszugleichen, werden die Bürstgeräte so ausgerüstet, daß der Abstand der Bürste zum Teppich durch eine entsprechende Einrichtung nachgestellt werden kann.

Mit dieser Verstelleinrichtung sollte es auch möglich sein, den optimalen Eingriff der Borsten in den Teppich, je nach Länge des Teppichflores, zu wählen. Im praktischen Gebrauch ist es aber für den Benutzer der Geräte fast unmöglich, vom jeweiligen Zustand der Bürste ausgehend

(1) die richtige Höheneinstellung zu wählen und
(2) zu erkennen, daß die Bürste verschlissen ist.

Sowohl bei nicht richtig gewählter Höheneinstellung, als auch bei verbrauchten Bürsten, erreicht man nicht die günstigste Reinigungswirkung. Darum ist es wichtig - und das soll mit der vorliegenden Erfindung u.a. erreicht werden - dem Benutzer solcher Fußbodenpflege- bzw. Reinigungsgeräte eine Hilfe zu geben

(a) die richtige Höheneinstellung, d.h. die richtige Eindringtiefe der Bürsten in den Teppich, zu wählen und
(b) zu erkennen, wenn die Bürsten verschlissen sind und ausgewechselt werden müssen.

Die hier beschriebenen Reinigungsgeräte sind ausnahmslos mit Universalmotoren ausgestattet. Ein Nachteil dieser Elektromotoren ist das Drehzahlverhalten in Abhängigkeit von der Last. Sinkt die Last durch den Verschleiß der Bürsten, dann steigt die Drehzahl des Elektromotors und der Bürste erheblich an und kann den doppelten Wert erreichen. Diese Drehzahlerhöhung führt aber zu einer starken Belastung der Bürstenlager und der Bürste selbst, da sich die Unwucht der Bürste viel stärker bemerkbar macht. Zu der Restunwucht der Bürste, die bei der Fertigung nicht mehr ausgeglichen wird, addiert sich dann eine zusätzliche Unwucht durch die verschlissene Bürste. Die Bauteile sowohl des schneller laufenden Elektromotors, insbesondere die Lager, der Kollektor und die Kohlebürsten, als auch der Antriebsriemen werden ebenfalls weit höher belastet und können zum früheren Ausfall des Elektromotors führen.

Als weiterer Nachteil kommt eine starke Erhöhung des Geräusches hinzu, das durch die zu schnell laufende Bürsten erzeugt wird und sich auf das Gehäuse überträgt. Das gilt aber nicht nur für den Zustand bei verschlissener Bürste; die unangenehme Geräuscherhöhung tritt auch jedesmal ein, wenn die laufende Bürste vom Teppichboden abgehoben wird.

Mit der Erfindung soll es u.a. erreicht werden, die Drehzahl des Elektromotors und damit der Bürste in bestimmten Grenzen konstant zu halten, um

(1) Bürste und Bürstenlager zu schonen und eine lange Lebensdauer zu erreichen;
(2) die Lebensdauer des Elektromotors zu verlängern, indem Schäden vermieden werden;
(3) den Geräuschpegel des Gerätes auf niedrigem Niveau zu halten.

Die hier beschriebenen Fußbodenpflegegeräte, insbesondere Teppichreinigungsgeräte, haben oftmals keinen genügenden Schutz für den Bürstenantriebsmotor und das Treibmittel zwischen Bürstenantriebmotor und der Bürste, das zumeist ein Riemen ist, insbesondere ein Flach- oder Keilriemen oder ein Zahnriemen.

Wenn durch eingesaugte Fremdkörper, zum Beispiel Tücher oder Schnüre, die Bürste blockiert, dann rutscht beim Gebrauch eines Flachriemens oder Keilriemens dieser durch und verbrennt. Ein neuer Riemen muß eingesetzt werden.

Bei Verwendung von Zahnriemen, d.h. bei jeglicher formschlüssigen Verbindung, bleibt der Elektromotor stehen und brennt nach einigen Sekunden durch.

Bekannt sind aber auch Teppich-Bürstgeräte, die mit einer mechanischen Kupplung ausgerüstet sind, welche im Blockierfalle den Antrieb vom Elektromotor zur Bürste unterbricht, so daß der Elektromotor ungehindert, aber mit hoher Drehzahl weiterlaufen kann, wie in der DE-PS 2 741 912 beschrieben.

Wird dieser Zustand der nicht mehr laufenden Bürste aber nicht erkannt, dann ist der Benutzer mit der Reinigungswirkung nicht zufrieden, und der Antriebsmotor läuft ohne Bürste ununterbrochen weiter, was wiederum Nachteile hat und erhöhten Verschleiß der Motor-Bauteile bewirkt.

Die mechanischen Kupplungen haben teilweise auch den Nachteil, daß sie oftmals auslösen, wenn nur kurze Schläge auf die Bürste einwirken, ohne daß eine bleibende Blockierung eintritt.

Es kann auch der Fall eintreten, daß sich das Bürstendrehmoment durch Verschmutzung zum Beispiel durch Einwickeln von Fäden oder Haaren in die Lager, was bei Geräten dieser Art oft geschieht, schleichend erhöht und die Belastung des Elektromotors zu groß wird. Der Elektromotor nimmt dann mehr und mehr Strom auf, erhitzt sich zu stark und brennt ebenfalls durch.

Die in dieser Hinsicht bekannten thermischen Motorschutzschalter haben den Nachteil, daß sie alle zu träge sind, und den Elektromotor im Blockierfall nicht frühzeitig genug abschalten, da meistens die Motorwicklungen schon durchbrennen, wenn die Thermoschalter noch nicht reagieren.

Aus US-A-3 555 357 ist eine elektronische Schaltungsanordnung der eingangs genannten gattungsgemäßen Art bekannt, bei welcher der Strom durch eine Last mittels einer Steuerschaltungsanordnung bei Überschreiten eines gewissen Grenzwertes unterbrochen wird. Diese bekannte Schaltungsanordnung stellt zwar einen Überstromschutz da, ist aber nur für Ohmsche Lasten verwendbar, die keine hohen Einschaltströme erzeugen, da sonst beim Einschalten der Strom bereits unterbrochen würde. Außerdem unterbricht diese Schaltungsanordnung nur, solange die Überlast anliegt, d.h. hier ist keine Selbsthaltung vorhanden, so daß die Stromzufuhr wieder hergestellt wird, wenn die Überlast nicht mehr vorhanden ist.

Weiterhin ist es aus FR-A-2 393 462 und FR-A-2 378 398 bekannt, eine Drehzahlabsenkung bei leerlaufenden Motoren vorzunehmen. Hierzu wird in FR-A-2 393 462 ein Leistungssteller mit Phasenanschnitt verwendet, der eine reine Drehzahlanpassung des Motors an die Last bewirkt. Im übrigen wird aber weder ein hoher Anlaufstrom überbrückt, noch bei Überlast die Stromzufuhr zum Motor unterbrochen. Für FR-A-2 378 398 trifft das gleiche zu, wobei hier durch zusätzliche Bauelemente die Drehzahlanpassung genauer einstellbar gemacht ist.

Aufgabe der Erfindung ist es insbesondere, eine elektronische Schaltungsanordnung für Fußbodenpflegegeräte mit einer von einem Elektromotor angetriebenen Bürsteneinrichtung zur Verfügung zu stellen, die es ermöglicht, die Gebrauchslebensdauer, während der das Fußbodenpflegegerät einwandfrei arbeitet, zu erhöhen.

Diese Aufgabe wird mit einer elektronischen Schaltungsanordnung der eingangs genannten Art erfindungsgemäß gelöst durch eine die Drehzahl des Elektromotots bei dessen Unterbelastung vermindernde Steuerschaltungsanordnung und eine Anzeigeschaltungsanordnung umfassend:

(a) ein erstes Anzeigeelement, das beim Betrieb des Elektromotors mit Unterbelastung und mit Normalbelastung eine erste Anzeige gibt, und

(b) ein zweites Anzeigelement, das beim Betrieb des Elektromotors mit Unterbelastung und bei Abschaltung des Elektromotors infolge Überlastung eine zweite Anzeige gibt,

so daß aus der Kombination der ersten und zweiten Anzeige ersichtlich ist, ob ein Betrieb mit Unterbelastung, eine Normalbelastung oder eine Abschaltung des Elektromotors wegen Überbelastung vorliegt, wobei die den Elektromotor bei dessen Überlastung abschaltende Steuerschaltungsanordnung eine selbsthaltende Schaltungsanordnung ist, die den Abschaltzustand solange hält, bis das Fußbodenpflegegerät vom Benutzer abgeschaltet wird, und wobei eine das Abschalten des Elektromotors während dessen überhöhter Stromaufnahme in der Einschaltphase verhindernde Hilfssteuerschaltungsanordnung vorgesehen ist.

Die Steuerschaltungsanordnungen verhindern einen übermäßigen Verschleiß von wesentlichen Teilen des Fußbodenpflegegeräts durch zu hohe Drehzahl des Elektromotors und eine Beschädigung oder einen völligen Ausfall des Elektromotors durch zu hohe Belastung, so daß in der Zwischenzeit, bis der Benutzer die Bürste nachgestellt, ausgewechselt oder gereinigt hat, keine Schädigung des Fußbodenpflegegeräts durch eine zu schlecht eingestellte Bürste, eine abgenutzte Bürste und/oder eine blockierte Bürste eintreten kann.

Durch diese Anzeigeschaltungsanordnung ist es dem Benutzer möglich, ein nicht einwandfreies Arbeiten des Fußbodenpflegegeräts leicht erkennen und beheben zu können, denn er erhält durch die Anzeige, daß der Elektromotor mit einer durch Unterbelastung verminderten Drehzahl betrieben wird, den Hinweis darauf, daß er die Bürste nachstellen muß, um ein optimales Funktionieren des Fußbodenpflegegeräts zu erreichen, oder daß die Bürste, sofern ein Nachstellen nicht mehr möglich ist, verschlissen ist und daher ausgetauscht werden muß.

Durch die Anzeige, daß der Elektromotor wegen einer Überlastung abgeschaltet worden ist, erhält der Benutzer den Hinweis, daß die Bürste blockiert ist und er die Bürste reinigen sollte, da in sehr vielen Fällen ein Blockieren der Bürste, wie oben dargelegt, durch eingesaugte Fremdkörper, Schmutz o.dgl. bewirkt wird.

Durch die das Abschalten des Elektromotors während dessen überhöhter Stromaufnahme in der Einschaltphase verhindernden Hilfssteuerschaltungsanordnung wird es vermieden, daß die Steuerschaltungsanordnung, welche den Elektromotor bei Überlastung abschaltet, in der Einschaltphase, in der der Motor einen erhöhten Strom aufnimmt, unbeabsichtigt wirksam werden und damit zu Betriebsstörungen des Fußbodenpflegegeräts führen kann.

Das erste Anzeigeelement ist bevorzugt eine, vorzugsweise über einen Widerstand parallel zum Elektromotor geschaltete erste Lampe, während das zweite Anzeigeelement eine, vorzugsweise parallel zu einem Schalter im Stromkreis des Elektromotors geschaltete und von einem Schalter, vorzugsweise einem Thyristor, kurzschließbare zweite Lampe ist, wobei letzterer so gesteuert ist, daß er öffnet, wenn der Strom im Stromkreis des Elektromotors unter einen vorbestimmten Wert absinkt.

Wenn also dieser Fall vorliegt, daß nur zwei Anzeigeelemente, beispielsweise die erwähnten Lampen vorgesehen sind, oder, allgemeiner gesagt, Anzeigeelemente, die nur einen Aus- und einen Ein-Zustand haben, dann kommt man bereits mit der Kombination der Anzeigen dieser beiden Anzeigeelemente aus, um festellen zu können, ob wegen Unterbelastung ein Betrieb des Elektromotors mit verminderter Drehzahl, wegen Normalbelastung ein Betrieb des Elektromotors mit normaler Drehzahl oder eine Abschaltung des Elektromotors wegen einer Überlastung vorliegt. Um das näher zu erläutern, sei angenommen, wie in der Praxis vorgesehen, daß die erste Lampe, deren Aufleuchten sowohl einen Betrieb des Elektromotors mit normaler Drehzahl als auch einen Betrieb des Elektromotors mit verminderter Drehzahl bedeutet, eine grüne Lampe sei, und daß die zweite Lampe, deren Aufleuchten sowohl einen Betrieb des Elektromotors mit verminderter Drehzahl als auch eine Abschaltung des Elektromotors wegen Überlastung anzeigt, eine rote Lampe sei. Dann ergeben sich folgende relevante Möglichkeiten im Betrieb des Fußbodenpflegegeräts:

(a) Die grüne Lampe leuchtet auf, während die rote Lampe nicht aufleuchtet. Das bedeutet, daß sich der Motor mit normaler Drehzahl also unter Normalbelastung dreht, so daß daher das Fußbodenpflegegerät einwandfrei arbeitet, insbesondere die Bürste richtig eingestellt ist und nicht ausgetauscht zu werden braucht.

(b) Sowohl die grüne Lampe als auch die rote Lampe leuchten auf. Das bedeutet, daß sich der Motor mit verminderter Drehzahl dreht und seine Stromaufnahme einen vorbestimmten Grenzwert unterschreitet, so daß daher die Bürste nachgestellt oder, falls ein Nachstellen nicht mehr möglich ist, ausgetauscht werden muß.

(c) Die grüne Lampe leuchtet nicht auf, aber die rote Lampe leuchtet auf. Das bedeutet, daß der Motor wegen Überlastung abgeschaltet und infoldessen die Bürste blockiert ist. Der Benutzer weiß infolgedessen, daß er zu prüfen hat, ob er das Blockieren der Bürste dadurch beheben kann, daß er die Bürste reinigt, weil in den meisten Fällen der Praxis ein Blockieren der Bürste durch Einsaugen von Fremdkörpern oder sonstiges Verschmutzen verursacht wird.

Eine bevorzugte Ausführungsform der Erfindung zeichnet sich dadurch aus, daß die den Elektromotor bei dessen Überlastung abschaltende Steuerschaltungsanordnung eine erste Spannungsdetektionsschaltung ist, welche eine Spannung detektiert, die an einem Widerstand abfällt, der im Stromkreis des Elektromotors vorgesehen ist, und welche einen die Unterbrechung des gesamten Stromkreises des Elektromotors bewirkenden ersten Schalter, insbesondere einen ersten Thyristor, öffnet, wenn der Strom im Stromkreis des Elektromotors einen vorbestimmten Wert übersteigt.

Hierdurch wird eine Abschaltung des Elektromotors sowohl bei direkter Blockierung als auch bei Erreichen eines maximalen Drehmoments und der dabei erhöhten Stromaufnahme in kurzer Ansprechzeit bewirkt, wobei dieses Ansprechen aber immer noch träge genug sein kann, um bei kurzen Schlägen auf die Bürste noch keine Abschaltung des Elektromotors zu bewirken.

Ein weiterer Vorteil dieser Abschaltung ist folgender: Oftmals kommt es bei Fußbodenpflegegeräten dieser Art auch zu Motorschäden infolge von Verschmutzung der Motorlager oder durch andere Ursachen, die zu erhöhter Reibung am Elektromotor führen. Hier gab es bisher nach dem Stande der Technik kaum einen wirkungsvollen Schutz des Elektromotors gegen Überlastung, obwohl diese vorerwähnten Ursachen fast immer zum Durchbrennen der Motorwicklungen, also zum Totalschaden führten. Die erfindungsgemäße elektronische Schaltung reagiert hier ebenfalls früh genug, um den Elektromotor vor totalem Verlust zu schützen. Ein defektes Lager oder eine andere Behinderung des Elektromotors, zum Beispiel auch durch Verklemmen des Motors nach einem harten Schlag oder Sturz, führt nicht zum Durchbrennen der Motorwicklungen und kann daher ohne große Kosten behoben werden.

Vorzugsweise ist die die Drehzahl des Elektromotors bei dessen Unterbelastung vermindernde Steuerschaltungsanordnung eine zweite Spannungsdetektionsschaltung, welche die Spannung detektiert, die an einem Widerstand abfällt, der in einem ersten von zwei antiparallelen Strompfaden des Stromkreises des Elektromotors vorgesehen ist, und welche beim Absinken der detektierten Spannung unter einen vorbestimmten Wert einen zweiten Schalter, vorzugsweise einen zweiten Thyristor, öffnet, der in dem zweiten der beiden antiparallelen Strompfade vorgesehen ist.

Auf diese Weise erhält der Elektromotor nur noch einen verminderten Strom, so daß seine Drehzahl herabgesetzt wird.

Eine besonders vorteilhafte Ausbildung der erfindungsgemäßen elektronischen Schaltungsanordnung, die den eben angegebenen Aufbau hat, ist dadurch charakterisiert, daß der erste Schalter, insbesondere der erste Thyristor, in dem ersten der beiden antiparallelen Strompfade vorgesehen ist, und daß der Widerstand, dessen Spannungsabfall durch die erste Spannungsdetektionsschaltung detektiert wird, in dem zweiten der beiden antiparallelen Strompfade angeordnet ist, so daß die zweite Spannungsdetektionsschaltung automatisch ein Öffnen des zweiten Schalters bewirkt, wenn der erste Schalter öffnet.

Die erste und/oder zweite Spannungsdetektionsschaltungsanordnung kann eine die Ladespannung an einem Kondensator detektierende Schaltungsanordnung sein, wobei dieser Kondensator durch die Spannung, die an dem oben erwähnten jeweiligen Widerstand abfällt, welcher im Stromkreis des Elektromotors liegt, aufgeladen wird.

Schließlich kann die erste Spannungsdetektionsschaltungsanordnung einen Schalter, insbesondere einen Thyristor aufweisen, welcher den ersten Schalter, insbesondere den ersten Thyristor, betätigt.

Bei einem solchen Aufbau ergibt sich ein besonders einfacher Aufbau der Hilfssteuerschaltung, die dann nämlich so ausgebildet sein kann, daß sie eine den Schalter, insbesondere den Thyristor, der ersten Spannungsdetektionsschaltung bezüglich des Einschaltmoments des Elektromotors verzögert freigebende Schaltungsanordnung ist.

Durch die erfindungsgemäße elektronische Schaltungsanordnung wird, wie die obigen Ausführungen zeigen, ein großer Teil der bisher bestehenden Nachteile bei Fußbodenpflegegeräten mit einer von einem Elektromotor angetriebenen Bürsteneinrichtung, also insbesondere bei Teppichbürstegeräten, beseitigt.

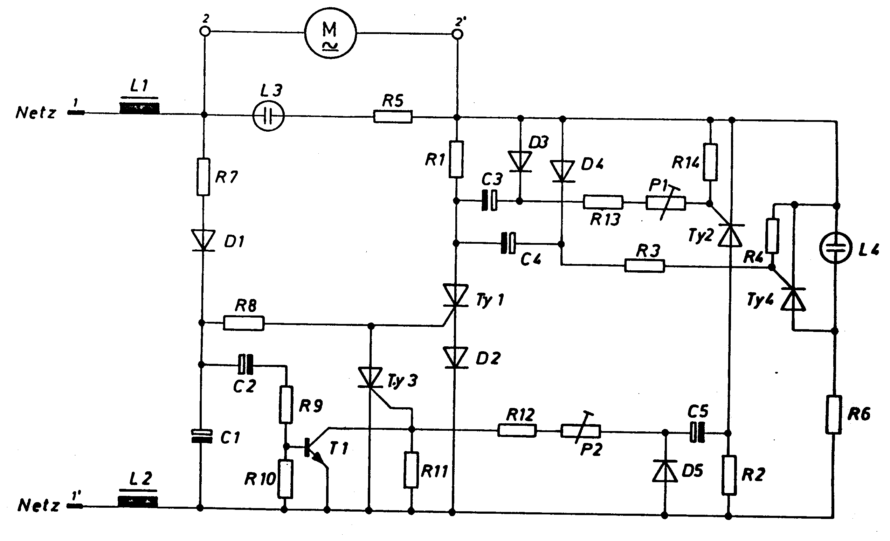

Die Erfindung sei nachstehend anhand einer besonders bevorzugten Ausführungsform einer erfindungsgemäßen elektronischen Schaltungsanordnung näher erläutert, deren Schaltbild in der einzigen Figur der Zeichnung dargestellt ist.

Die in der Zeichnung dargestellte gesamte elektronische Schaltungsanordnung besteht aus den folgenden einzelnen Schaltungsanordnungen:
Zunächst umfaßt die elektronische Schaltungsanordnung einen Motorstromkreis:
Der Motorstromkreis, der vom Stromnetz her über die Netzanschlüsse 1 und 1' gespeist wird, in die je eine Hochfrequenz-Entstörungsdrossel L1 und L2 eingefügt ist, besteht aus einer Reihenschaltung des als Universalmotor ausgebildeten Elektromotors M, der mit den Anschlüssen 2 und 2' verbunden ist, und zwei antiparallelen Strompfaden, von denen der erste Strompfad in Reihenschaltung einen Widerstand R1, einen Thyristor Ty1 und eine Diode D2 und der zweite Strompfad einen gegensinnig zum Thyristor Ty1 geschalteten Thyristor Ty2 und einen Widerstand R2 in Reihenschaltung aufweist.

Weiter umfaßt die dargestellte Schaltungsanordnung eine erste Steuerschaltung, welche die Funktion hat, den Thyristor Ty1 durchzuschalten:
Diese erste Steuerschaltung besteht aus einer zwischen die beiden Netzanschlüsse geschalteten Reihenschaltung eines Widerstands R7, einer Diode D1 und eines Kondensators C1. Außerdem umfaßt diese Steuerschaltung einen Widerstand R8, der an seinem einen Anschluß mit der Verbindungsstelle zwischen der Diode D1 und dem Kondensator C1 verbunden ist, während sein anderer Anschluß an das Gatter des Thyristors Ty1 geführt ist.

Außerdem ist eine Steuerschaltung zum Einschalten des Thyristors Ty2 vorgesehen:
Diese Steuerschaltung umfaßt eine parallel zum Widerstand R1 liegende Reihenschaltung aus einer Diode D3 und einem Kondensator C3. Sie weist weiterhin eine von der Verbindungsstelle zwischen der Diode D3 und dem Kondensator C3 abgehende Widerstandsreihenschaltung aus einem Widerstand R13 und einem Potentiometer P1 auf, die zu dem Gatter des Thyristors Ty2 geführt ist, sowie einen Widerstand R14, der zwischen dem Gatter und der Kathode des Thyristors Ty2 liegt und der Diode D3 in Reihenschaltung mit dem Widerstand R13 und dem Potentiometer P1 parallel geschaltet ist.

Eine dritte Steuerschaltung dient zum Abschalten des Thyristors Ty1 und dadurch gleichzeitig zum indirekten Abschalten des Thyristors Ty2 über die eben beschriebene Steuerschaltung:
Diese dritte Steuerschaltung umfaßt eine Reihenschaltung aus einem Kondensator C5 und einer Diode D5, die dem Widerstand R2 parallel geschaltet ist, sowie einen Thyristor Ty3. Und sie umfaßt außerdem eine Diode D2, welche ihrerseits zwischen die Kathode des Thyristors Ty1 und den Netzanschluß 1' geschaltet ist. Weiterhin umfaßt die dritte Steuerschaltung eine Reihenschaltung aus einem Potentiometer P2 und einem Widerstand R12, die an ihrem einen Ende mit der Verbindungsstelle zwischen dar Diode D5 und dem Kondensator C5 verbunden ist, während sie an ihrem anderen Ende an das Gatter des Thyristors Ty3 geführt ist. Schließlich ist noch ein Widerstand R 11 zwischen Gatter und Kathode des Thyristors Ty3 geschaltet.

Darüberhinaus ist eine Hilfssteuerschaltung vorgesehen, welche die eben beschriebene dritte Steuerschaltung in der Einschaltphase unwirksam macht:
Diese Hilfssteuerschaltung umfaßt eine Reihenschaltung aus einem Kondensator C2, einem Widerstand R 9 und einem Widerstand R10, die parallel zum Kondensator C1 liegt, sowie einen Transistor T1, dessen Basis mit der Verbindungsstelle zwischen den beiden Widerständen R9 und R10 verbunden ist, während sein Kollektor mit dem Gatter des Thyristors Ty3 verbunden ist und sein Emitter zum Netzanschluß 1' geführt ist.

Schließlich ist eine erste Anzeigeschaltung vorgesehen, die eine Reihenschaltung aus einer grünen Lampe L3 und einem Widerstand R5 ist, welche parallel zum Motor liegt. Diese grüne Lampe leuchtet bei Betrieb des Motors M mit normaler Drehzahl und bei Betrieb des Motors M mit verminderter Drehzahl auf.

Endlich weist die dargestellte Schaltungsanordnung eine zweite Anzeigeschaltung auf:
Diese zweite Anzeigeschaltung umfaßt eine Reihenschaltung aus einer roten Lampe L4 und einem Widerstand R6, die parallel zu dem zweiten Strompfad aus dem Thyristor Ty2 und dem Widerstand R2 liegt. Außerdem weist sie einen Thyristor Ty4 auf, der parallel zu der roten Lampe L4 geschaltet ist und dessen Gatter über einen Widerstand R4 mit dessen Kathode verbunden ist. An die Verbindungsstelle zwischen dem Thyristor Ty4 und dem Widerstand R4 ist der eine Anschluß eines Widerstands R3 angeschlossen, dessen anderer Anschluß mit der Verbindungsstelle zwischen einem Kondensator C4 und einer Diode D4 verbunden ist, die ihrerseits eine parallel zu dem Widerstand R1 liegende Reihenschaltung bilden.

Es sei nun die Funktionsweise der in der Zeichnung dargestellten Schaltungsanordnung erläutert:
Es sei zunächst der Normalbetrieb des Motors, in dem dieser unter Normalbelastung mit normaler Drehzahl arbeitet, beschrieben:
Unmittelbar nach dem Einschalten des Geräts, also beispielsweise eines Bürstsaugers, in dem die Schaltung vorgesehen ist, sind noch beide Thyristoren Ty1 und Ty2 gesperrt. Während sich eine Spannung am Kondensator C1 aufbaut, fließt ein Strom ins Gatter des Thyristors Ty1. Dieser schaltet eine Halbwelle des über die Netzanschlüsse 1 und 1' zugeführten Netzwechselstroms durch, so daß der Elektromotor M anlaufen kann. Dadurch fällt am Widerstand R1 eine Spannung ab, welche die Kondensatoren C3 und C4 auflädt. Über den Widerstand R13 und das Potentiometer P1 fließt nun ein Strom ins Gatter des Thyristors Ty2, der die zweite Halbwelle des Netzwechselstroms durchschaltet. Gleichzeitig wird der Thyristor Ty4 angesteuert, welcher die rote Lampe L4 überbrückt, so daß diese nicht aufleuchtet. Jetzt befindet sich die Schaltung im Normalbetrieb, d.h. die Steuerschaltungsanordnung bewirkt, daß der Elektromotor M mit normaler Drehzahl betrieben wird.

Nunmehr sei der Fall einer niedrigeren Motorlast, also einer Unterbelastung des Elektromotors erläutert:
Wenn die Belastung des Elektromotors etwa durch Anheben des Bürstsaugers vom Boden absinkt, dann steigt die Drehzahl des Elektromotors M, und die Stromaufnahme fällt ab. Dadurch fällt weniger Spannung am Widerstand R1 ab, so daß die Spannung am Kondensator C3 niedriger wird. Im vorliegenden Falle ist das Potentiometer P1 so eingestellt, daß der Thyristor Ty2 ab einer Tourenzahl von etwa 3800 bis 3900 U/min sperrt und der Elektromotor nur eine Halbwelle des Netzwechselstroms erhält. Dadurch sinkt die Drehzahl des Elektromotors M entsprechend ab.

Nun sei der Fall erläutert, daß eine Bürste teilweise oder ganz verschlissen ist:
Wenn die Bürste verschlissen ist, nimmt der Elektromotor M so wenig Strom auf, daß die Spannung am Widerstand R1 weiter sinkt und den Thyristor Ty4 sperrt. Dadurch wird die rote Lampe L4 nicht mehr überbrückt, so daß diese jetzt aufleuchtet. Da gleichzeitig auch die grüne Lampe L3, wie oben beschrieben, aufleuchtet, bedeutet das, daß die Bürste wegen ihres Verschleißes entweder nachgestellt oder, sofern sie vollständig verschlissen ist, ausgetauscht werden muß. Wie man hieraus sieht, beinhaltet die obige Angabe, daß ein Betrieb des Elektromotors mit verminderter Drehzahl angezeigt wird, nicht nur schlechthin eine Anzeige des Betriebs mit verminderter Drehzahl, sondern sie beinhaltet vorzugsweise, daß eine Anzeige dann erfolgt, wenn der Betrieb des Elektromotors mit verminderter Drehzahl erfolgt und gleichzeitig der vom Elektromotor aufgenommene Strom einen vorbestimmten Wert unterschreitet.

Nun sei der Fall beschrieben, daß eine Überstromabschaltung, zum Beispiel infolge Blockierens der Bürste, stattfindet:
Die Spannung, die am Widerstand R2 abfällt, ist proportional der Motorlast des Elektromotors M. Der Kondensator C5 lädt sich entsprechend dieser Spannung auf. Das Potentiometer P2 ist so einjustiert, daß der Thyristor Ty3 bei Überschreiten des erlaubten Maximalstroms durchschaltet. Dadurch wird die Steuerspannung, die dem Thyristor Ty1 über den Widerstand R8 zugeführt wird, an Masse gelegt, so daß der Thyristor Ty1 sperrt. Das hat wiederum zur Folge, daß am Widerstand R1 keine Spannung mehr abfällt, wodurch bewirkt wird, daß die Thyristoren Ty2 und Ty4 in den sperrenden Zustand übergehen. Damit sind beide Halbwellen der Netzwechselspannung abgeschaltet, so daß der Elektromotor M stehenbleibt und die grüne Lampe L3 nicht mehr aufleuchtet. Jedoch leuchtet wegen des Sperrens des Thyristors Ty4 die rote Lampe L4 auf. Dieses Aufleuchten der roten Lampe L4 bei gleichzeitigem Nichtaufleuchten der grünen Lampe L3 bedeutet, daß der Elektromotor M wegen Überlastung abgeschaltet worden ist. Dieser Abschaltzustand bleibt erhalten, solange das Gerät eingeschaltet bleibt, weil sich der Thyristor Ty3 selbst hält.

Um Weiterarbeiten zu können, muß zuerst ausgeschaltet und dann wieder eingeschaltet werden, wodurch das Gerät wieder in den Normalbetrieb gebracht wird, sofern vorher die Ursache der Überstromabschaltung, beispielsweise das Blockieren einer Bürste, beseitigt worden ist.

Endlich sei die Einschaltverzögerung der Überstromabschaltung erläutert:
Der Elektromotor M nimmt im Moment des Einschaltens kurzzeitig einen mehrfach höheren Strom als im Dauerbetrieb unter Normalbelastung auf. In dieser Einschaltphase darf die Überstromabschaltung nicht ansprechen, was dadurch erreicht wird, daß der Kondensator C2 in dieser Einschaltphase aufgeladen wird, beispielsweise innerhalb von 1 bis 2 Sekunden. Solange sich der Kondensator C2 auflädt, fließt ein Strom in die Basis des Transistors T1. Dadurch schaltet der Transistor T1 das Gatter des Thyristor Ty3 an Masse und verhindert, daß dieser auf die am Widerstand R11 abfallende Spannung anspricht. Wenn schließlich der Kondensator C2 aufgeladen ist, sperrt der Transistor T1, und das Gatter des Thyristors Ty3 wird freigegeben, so daß nun eine normale Überstromabschaltung erfolgen kann.

Die beschriebene und dargestellte elektronische Schaltungsanordnung für Fußbodenpflegegeräte mit einer von einem Elektromotor angetriebenen Bürsteneinrichtung hat also insbesondere folgende Vorteile:

(1) Es erfolgt eine Begrenzung der Drehzahl des Elektromotors bei niedriger Motorbelastung.

(2) Die kombinierte Anzeige von grüner und roter Lampe läßt erkennen:

(a) wenn das Gerät im Normalbetrieb arbeitet,

(b) wenn eine Bürste verschleißbedingt nachgestellt werden muß oder total verschlissen ist und ausgewechselt werden muß, und

(c) wenn eine Bürste blockiert ist.

(3) Es erfolgt ein Abschalten des Elektromotors bei Überlastung.

(4) In der Einschaltphase wird eine Überlastungsabschaltung verhindert.

Selbstverständlich ist die Erfindung nicht auf die dargestellten und beschriebenen Ausführungen beschränkt, sondern sie läßt sich in verschiedenster Weise abwandeln. So liegt es innerhalb des Gegenstandes der vorliegenden Erfindung, anstelle des Widerstands R1 und/oder R2 einen anderen Stromfühler vorzusehen, der ein dem Strom im jeweiligen Strompfad des Stromkreises des Elektromotors M proportionales Signal abgibt, und die jeweilige Spannungsdetektionsschaltung kann allgemein eine dieses Signal detektierende und daraus ein Steuersignal für den zu betätigenden Schalter Ty1 bzw. Ty2 ableitende Schaltung sein.

Weiter liegt es im Rahmen der Erfindung, die am Widerstand R2 abgenommene Spannung oder das Signal, welches von einem entsprechenden Stromfühler erhalten wird, zur Steuerung einer automatischen Nachstellung der Bürste zu verwenden, so daß dann ein gleichzeitiges Aufleuchten der grünen und roten Lampe L3 und L4 nur noch in dem Falle erfolgt, wenn die Bürste nicht mehr nachstellbar, also vollständig verschlissen ist.

**Patentansprüche**

1. Elektronische Schaltungsanordnung für Fußbodenpflegegeräte mit einer von einem Elektromotor (M) angetriebenen Bürsteneinrichtung, umfassend eine den Elektromotor (M) bei dessen Überlastung abschaltende Steuerschaltungsanordnung (C5, D5, Ty3, P2, R11, R12), **gekennzeichnet** durch eine die Drehzahl des Elektromotors (M) bei dessen Unterbelastung vermindernde Steuerschaltungsanordnung (C3, D3, P1, R13, R14) und eine Anzeigeschaltungsanordnung (L3, R5; L4, C4, D4, Ty4, R3, R4, R6) umfassend:

(a) ein erstes Anzeigeelement (L3), das beim Betrieb des Elektromotors (M) mit Unterbelastung und mit Normalbelastung eine erste Anzeige gibt, und

(b) ein zweites Anzeigelement (L4), das beim Betrieb des Elektromotors (M) mit Unterbelastung und bei Abschaltung des Elektromotors (M) infolge Überlastung eine zweite Anzeige gibt,

so daß aus der Kombination der ersten und zweiten Anzeige ersichtlich ist, ob ein Betrieb mit Unterbelastung, eine Normalbelastung oder eine Abschaltung des Elektromotors (M) wegen Überlastung vorliegt, wobei die den Elektromotor (M) bei dessen Überlastung abschaltende Steuerschaltungsanordnung (C5, D5, Ty3, P2, R11, R12) eine selbsterhaltende Schaltungsanordnung ist, die den Abschaltzustand solange hält, bis das Fußbodenpflegegerät vom Benutzer abgeschaltet wird, und wobei eine das Abschalten des Elektromotors (M) während dessen überhöhter Stromaufnahme in der Einschaltphase verhindernde Hilfssteuerschaltungsanordnung (C2, T1, R9, R10) vorgesehen ist.

2. Elektronische Schaltungsanordnung für Fußbodenpflegegeräte nach Anspruch 1, dadurch **gekennzeichnet,** daß das erste Anzeigeelement eine parallel zum Elektromotor (M) geschaltete erste Lampe (L3) ist.

3. Elektronische Schaltungsanordnung für Fußbodenpflegegeräte nach Anspruch 1, dadurch **gekennzeichnet,** daß das zweite Anzeigelement eine im Stromkreis des Elektromotors (M) vorgesehene und von einem Schalter kurzschließbare zweite Lampe (L4) ist, wobei der Schalter (Ty4) so gesteuert ist, daß er öffnet, wenn der Strom im Stromkreis des Elektromotors (M) unter einen vorbestimmten Wert absinkt.

4. Elektronische Schaltungsanordnung für Fußbodenpflegegeräte nach einem der Ansprüche 1 bis 3, dadurch **gekennzeichnet,** daß die den Elektromotor (M) bei dessen Überlastung abschaltende Steuerschaltungsanordnung eine erste Spannungsdetektionsschaltung (C5, D5, P2, R11, R12) ist, welche eine Spannung detektiert, die an einem Widerstand (R2) abfällt, der im Stromkreis des Elektromotors (M) vorgesehen ist, und welche einen die Unterbrechung des gesamten Stromkreises des Elektromotors (M) bewirkenden ersten Schalter (Ty1) öffnet, wenn der Strom im Stromkreis des Elektromotors (M) einen vorbestimmten Wert übersteigt.

5. Elektronische Schaltungsanordnung dür Fußbodenpflegegeräte nach einem der Ansprüche 1 bis 4, dadurch **gekennzeichnet,** daß die die Drehzahl des Elektromotors (M) bei dessen Unterbelastung vermindernde Steuerschaltungsanordnung eine zweite Spannungsdetektionsshaltung (C3, D3, R13, P1, R14) umfaßt, welche die Spannung detektiert, die an einem Widerstand (R1) abfällt, welcher in einem ersten von zwei antiparallelen Strompfaden des Stromkreises des Elektromotors (M) vorgesehen ist, und welche beim Absinken der detektierten Spannung unter einen vorbestimmten Wert einen Schalter (Ty2) öffnet, der in dem zweiten der beiden antiparallelen Strompfade vorgesehen ist.

6. Elektronische Schaltungsanordnung für Fußbodenpflegegeräte nach Anspruch 4 und 5, dadurch **gekennzeichnet,** daß der erste Schalter (Ty1) in dem ersten der beiden antiparallelen Strompfade vorgesehen ist, und daß der Widerstand (R2), dessen Spannungsabfall durch die erste Spannungsdetektionsschaltung (C5, D5, P2, R11, R12) detektiert wird, in dem zweiten der beiden antiparallelen Strompfade angeordnet ist, so daß die zweite Spannungsdetektionsschaltung (C3, D3, R13, P1, R14) ein Öffnen des zweiten Schalters (Ty2) bewirkt, wenn der erste Schalter (Ty1) öffnet.

7. Elektronische Schaltungsanordnung für Fußbodenpflegegeräte nach Anspruch 4, 5 oder 6, dadurch **gekennzeichnet,** daß die erste und/oder zweite Spannungsdetektionsschaltung (C5, D5, P2, R11, R12; C3, D3, R13, P1, R14) eine die Ladespannung an einem Kondensator (C5; C3) detektierende Schaltungsanordnung ist.

8. Elektronische Schaltungsanordnung für Fußbodenpflegegeräte nach Anspruch 4, dadurch **gekennzeichnet,** daß die erste Spannungsdetektionsschaltung (C5, D5, P2, R11, R12) einen Schalter (Ty3) aufweist, welcher beim Überschreiten des erlaubten Maximalstroms im Stromkreis des Elektromotors (M) den ersten Schalter (Ty1) öffnet und diesen Zustand solange festhält oder speichert, bis das Fußbodenpflegegerät vom Benutzer abgeschaltet wird.

9. Elektronische Schaltungsanordnung für Fußbodenpflegegeräte nach Anspruch 1 und 8, dadurch **gekennzeichnet,** daß die Hilfssteuerschaltung (T1) eine den Schalter (Ty3) der ersten Spannungsdetektionsschaltung (C5, D5, P2, R11, R12) bezüglich des Einschaltmoments des Elektromotors (M) verzögert freigebende Schaltungsanordnung ist.

10. Elektronische Schaltungsanordnung für Fußbodenpflegegeräte nach einem oder mehreren der Ansprüche 1 bis 9, dadurch **gekennzeichnet,** daß einer oder mehrere der Schalter (Ty1 bis Ty4) jeweils ein Thyristor ist.

**Claims**

1. An electronic circuit arrangement for floor cleaning apparatus with a brush device driven by an electric motor (M), comprising a control circuit arrangement (C5, D5, Ty3, P2, R11, R12) which switches off the electric motor (M) in the event of its overloading, characterised by a control circuit arrangement (C3, D3, P1, R13, R14) which reduces the speed of the electric motor (M) in the event of its underloading and by a display circuit arrangement (L3, R5; L4, C4, D4, Ty4, R3, R4, R6) comprising:

    (a) a first display element (L3) which produces a first display when the electric motor (M) operates with underloading and with normal loading and

    (b) a second display element (L4) which produces a second display when the electric motor (M) operates with underloading and when the electric motor (M) is switched off due to overloading,

    so that from the combination of the first and second displays it is detectable whether operation with underloading, normal loading or the disconnection of the electric motor (M) due to overloading is taking place, where the control circuit arrangement (C5, D5, Ty3, P2, R11, R12), which switches off the electric motor (M) in the event of its overloading, is a self-maintaining circuit arrangement which holds the switched off state until the floor cleaning apparatus is disconnected by the user, and where an auxiliary circuit arrangement (C2, T1, R9, R10) is provided which prevents the electric motor (M) from being switched off during the time of its increased current consumption in the switch-on phase.

2. An electronic circuit arrangement for floor cleaning apparatus as claimed in Claim 1, characterised in that the first display element is a first lamp (L3) connected in parallel to the electric motor (M).

3. An electronic circuit arrangement for floor cleaning apparatus as claimed in Claim 1, characterised in that the second display element is a second lamp (L4) which is arranged in the circuit of the electric motor (M) and which can be short-circuited by a switch, where the switch (Ty4) is controlled in such manner that it opens when the current in the circuit of the electric motor (M) falls below a predetermined value.

4. An electronic circuit arrangement for floor cleaning apparatus as claimed in one of Claims 1 to 3, characterised in that the control circuit arrangement which switches off the electric motor (M) in the event of its overloading is a first voltage detection circuit (C5, D5, P2, R11, R12) which detects a voltage dropping across a resistor (R2) arranged in the circuit of the electric motor (M) and which opens a first switch (Ty1), which interrupts the entire circuit of the electric motor (M), when the current in the circuit of the electric motor (M) exceeds a predetermined value.

5. An electronic circuit arrangement for floor cleaning apparatus as claimed in one of Claims 1 to 4, characterised in that the control circuit arrangement which reduces the speed of the electric motor (M) in the event of its underloading comprises a second voltage detection circuit (C3, D3, R13, P1, R14) which detects the voltage dropping across a resistor (R1) which is arranged in a first of two anti-parallel current paths of the circuit of the electric motor (M) and which opens a switch (Ty2), which is arranged in the second of the two anti-parallel current paths, when the detected voltage falls below a predetermined value.

6. An electronic circuit arrangement for floor cleaning apparatus as claimed in Claim 4 and 5, characterised in that the first switch (Ty1) is arranged in the first of the two anti-parallel current paths, and that the resistor (R2), the voltage drop of which is detected by the first voltage detection circuit (C5, D5, P2, R11, R12), is arranged in the second of the two anti-parallel current paths so that the second voltage detection circuit (C3, D3, R13, P1, R14) opens the second switch (Ty2) when the first switch (Ty1) opens.

7. An electronic circuit arrangement for floor cleaning apparatus as claimed in Claim 4, 5 or 6, characterised in that the first and/or second voltage detection circuit (C5, D5, P2, R11, R12; C3, D3, R13, P1, R14) is a circuit arrangement which detects the charging voltage connected to a capacitor (C5; C3).

8. An electronic circuit arrangement for floor cleaning apparatus as claimed in Claim 4, characterised in that the first voltage detection circuit (C5, D5, P2, R11, R12) comprises a switch (Ty3) which opens the first switch (Ty1) when the permitted maximum current in the circuit of the electric motor (M) is exceeded and which maintains or stores this state until the floor cleaning apparatus is disconnected by the user.

9. An electronic circuit arrangement for floor cleaning apparatus as claimed in Claim 1 and 8, characterised in that the auxiliary control circuit (T1) is a circuit arrangement which releases the switch (Ty3) of the first voltage detection circuit (C5, D5, P2, R11, R12) with a delay in relation to the time of switch-on of the electric motor (M).

10. An electronic circuit arrangement for floor cleaning apparatus as claimed in one or more of Claims 1 to 9, characterised in that one or more of the switches (Ty1 to Ty4) is a thyristor.

**Revendications**

1. Circuit électronique pour appareils d'entretien des sols comprenant un dispositif de brossage entraîné par un moteur électrique (M), qui comprend un circuit de commande (C5, D5, Ty3, P2, R11, R12) qui met le moteur électrique (M) hors circuit en cas de surcharge, caractérisé par un circuit de commande (C3, D3, P1, R13, R14) qui réduit la vitesse de rotation du moteur électrique (M) lorsqu'il est sous charge partielle, et par un circuit indicateur (L3, R5 ; L4, C4, D4, Ty4, R3, R4, R6) comprenant :

    (a) un premier élément indicateur (L3) qui donne une première indication lorsque le moteur électrique (M) travaille sous charge partielle et sous charge normale, et

(b) un deuxième élément indicateur (L4) qui donne une deuxième indication lorsque le moteur électrique (M) travaille sous charge partielle et lorsque le moteur électrique (M) est mis hors circuit en réponse à une surcharge,

de sorte qu'on peut savoir, par la combinaison de la première indication et de la deuxième indication, si l'on est en présence d'un travail sous charge partielle, d'un travail sous charge normale ou d'une mise hors circuit du moteur électrique (M) pour surcharge, cependant que le circuit de commande (C5, D5, Ty3, P2, R11, R12) qui met le moteur électrique (M) hors circuit en cas de surcharge de ce moteur est un circuit d'auto-maintien qui maintient l'état hors circuit jusqu'à ce que l'appareil d'entretien des sols soit mis à l'arrêt par l'utilisateur, et cependant qu'il est prévu un circuit de commande auxiliaire (C2, T1, R9, R10) qui interdit la mise hors circuit du moteur électrique (M) pendant sa phase de fort appel de courant dans la phase de mise en marche

2. Circuit électronique pour appareils d'entretien des sols selon la revendication 1, caractérisé en ce que le premier élément indicateur est une première lampe (L3) connectée en parallèle avec le moteur électrique (M).

3. Circuit électronique pour appareils d'entretien des sols selon la revendication 1, caractérisé en ce que le deuxième élément indicateur est une deuxième lampe (L4) prévue dans le circuit du moteur électrique (M) et qui peut être court-circuitée par un interrupteur, l'interrupteur (Ty4) étant commandé de manière à s'ouvrir lorsque le courant circulant dans le circuit du moteur électrique (M) tombe au-dessous d'une valeur prédéterminée.

4. Circuit électronique pour appareils d'entretien des sols selon une des revendications 1 à 3, caractérisé en ce que le circuit de commande qui met le moteur électrique (M) hors circuit en cas de surcharge est un premier circuit de détection de la tension (C5, D5, P2, R11, R12) qui détecte une chute de tension aux bornes d'une résistance (R2) prévue dans le circuit du moteur électrique (M), et qui ouvre un premier interrupteur (Ty1) qui détermine l'interruption de l'ensemble du circuit du moteur électrique (M) lorsque le courant circulant dans le circuit du moteur électrique (M) excède une valeur prédéterminée.

5. Circuit électronique pour appareils d'entretien des sols selon une des revendications 1 à 4, caractérisé en ce que le circuit de commande qui réduit la vitesse de rotation du moteur électrique (M) lorsqu'il est sous charge partielle comprend un deuxième circuit de détection de la tension (C3, D3, R13, P1, R14) qui détecte la chute de tension aux bornes d'une résistance (R1) prévue dans une première de deux branches anti-parallèles du circuit du moteur électrique (M) et qui, lorsque la tension détectée tombe au-dessous d'une valeur prédéterminée, ouvre un interrupteur (Ty2) qui est prévu dans la deuxième des deux branches de circuit anti-parallèles.

6. Circuit électronique pour appareils d'entretien des sols selon les revendications 4 et 5, caractérisé en ce que le premier interrupteur (Ty1) est prévu dans la première des deux branches de circuit anti-parallèle, et en ce que la résistance (R2) dont la chute de tension est détectée par le premier circuit détecteur de tension (C5, D5, P2, R11, R12) est intercalée dans la deuxième des deux branches de circuit anti-parallèles, de sorte que le deuxième circuit de détection de tension (C3, D3, R13, P1, R14) provoque l'ouverture du deuxième interrupteur (Ty2) lorsque le premier interrupteur (Ty1) s'ouvre.

7. Circuit électronique pour appareils d'entretien des sols selon les revendications 4, 5 et 6, caractérisé en ce que les premier et/ou deuxième circuits de détection (C5, D5, P2, R11, R12 ; C3, D3, R13, P1, R14) est ou sont un ou des circuit(s) qui détecte(nt) la tension de charge d'un condensateur (C5 ; C3).

8. Circuit électronique pour appareils d'entretien des sols selon la revendication 4, caractérisé en ce que le premier circuit détecteur de tension (C5, D5, P2, R11, R12) comprend un interrupteur (Ty3) qui, lorsque le courant circulant dans le circuit du moteur électrique (M) excède l'intensité maximale permise, ouvre le premier interrupteur (Ty1) et maintient ou mémorise cet état jusqu'à ce que l'appareil d'entretien des sols soit mis à l'arrêt par l'utilisateur.

9. Circuit électronique pour appareils d'entretien des sols selon les revendications 1 et 8, caractérisé en ce que le circuit de commande auxiliaire (T1) est un circuit qui libère l'interrupteur (Ty3) du premier circuit de détection de tension (C5, D5, P2, R11, R12) avec retard par rapport à l'instant de mise en circuit du moteur électrique (M).

**10.** Circuit électronique pour appareils d'entretien des sols selon une ou plusieurs des revendications 1 à 9, caratérisé en ce qu'un ou plusieurs des interrupteurs (Ty1 à Ty4) est un thyristor ou sont des thyristors.